# EUROPEAN PATENT SPECIFICATION

(11) **EP 1 813 853 B1**
(45) Date of publication and mention of the grant of the patent: **13.05.2009**
(21) Application number: 06001696.1
(22) Date of filing: 27.01.2006
(51) Int. Cl.: F17C 5/00

(54) **High pressure gas container with an auxiliary valve and process for filling it**
Hochdruckgasbehälter mit Zusatzventil und Verfahren zu dessen Befüllung
Réservoir pour gaz haute pression et méthode de remplissage

(43) Date of publication of application: 01.08.2007
(73) Proprietor: L'AIR LIQUIDE, Société Anonyme pour l'Etude et l'Exploitation des Procédés Georges Claude, 75007 Paris (FR); Air Liquide Deutschland GmbH, 40235 Düsseldorf (DE)
(72) Inventor: Klebe, Ulrich, 47647 Kerken (DE); Michel, Friedel, 40699 Erkrath (DE)
(74) Representative: Kahlhöfer, Hermann

(56) References cited:
- EP-A- 0 743 485
- EP-A- 1 474 317
- EP-A- 1 559 949
- EP-A- 1 598 244
- WO-A-94/15124
- US-A1- 2005 269 351

## Description

The invention concerns a high pressure gas container comprising a container body for storing gas and a process for filling a high pressure gas container having a container body for storing gas and at least one first valve for discharging the stored gas.

For cold filling pressure containers, according to DE 101 07 895 a filling gas is cooled before its introduction into the pressure container, wherein on completion of the filling process the pressure container is sealed in a pressure-tight manner. As the gas warms up the pressure in the pressure container rises rapidly.

According to DE 198 17 324 a fuel gas is filled into a light weight tank made with a liner of chrome nickel steel inside of a fibre reinforced shell, wherein the fuel is introduced in deep cooled liquid form and is stored at a pressure above 300 bar.

According to WO 2005/043033 a pressure vessel, for example of an airbag system, is filled with a gas or a gas mixture at a temperature which is higher than the boiling point thereof, closing the cold vessel and a pressure is produced in the filled and closed vessel by heating it to ambient temperatures.

According to WO 2005/059431 a pressure container is filled with a gas mixture, wherein a gas mixture is introduced in its gaseous state or in its liquefied state or at least one gas component of a gas mixture is introduced in its gaseous state or in its liquefied state in a cooled pressure gas container.

US 1,414,359 discloses a process for filling compressed gas containers, wherein a given quantity of liquefied gas is placed in a vessel of low specific heat capacity that is suspended within the container, the container is closed, and the walls of the container are maintained at a temperature above 0°C until the enclosed substance has been converted into gaseous form.

DE 101 19 115 discloses a pressure container particularly suited for filling with low boiling permanent gases or gas mixtures at low temperatures which is provided on its inner surface with a material having a low heat conducting coefficient.

EP 0 033 386 discloses a process for transporting and storing permanent gases, in particular hydrogen, under pressure in pressure containers, wherein the gases are cooled to low temperatures above their boiling point and are transported and stored in isolated pressure containers.

EP 1 559 949 A1 describes a fuelling system of a gas driven vehicle and a refuelling process. The size, the valves and the filling process of the system are not designed for the series production of gas containers as used for airbag systems.

US 2005/0269351 A1, considered as closest prior art, discloses a gas container with separate charging and discharging openings used for combustion supportable or flammable gas, which is released under controlled conditions. Such containers are not designed for releasing the content very fast as necessary for inflating an airbag.

It is known, that airbags in vehicles are increasingly using new types of gas generators, which in the event of an accident inflate the airbag within a few milliseconds. High pressure gas storage systems are used as gas generators.

Three different types of gas generators are currently in use:
- Chemical generators which generate gas by reaction of a chemical solid with ambient air;
- Hybrid generators which use both a fuel solid and gas that is stored in a pressurized high pressure gas container;
- Cold gas generators that store gas in pressurized gas containers at high pressures up to 700 bar at 15°C.

The gas generators, which are filled with various gases at ambient temperatures, provide for considerable technical problems, both in terms of their production and their filling with pressures of up to 700 bar or above. The heat of compression in particular during a rapid filling leads to undefined temperature conditions which usually considerably affect the metering precision with which the amount of gas is introduced into the gas containers. To meet a high metering standard is important with respect to the subsequent inflation characteristics of the airbag. Very expensive and complex piston or diaphragm compressors are required to generate the very high pressures. This entails high investment and high maintenance costs. In addition, a correspondingly complex and expensive downstream gas supply is required for these pressures.

The known cold filling techniques avoid the problem originating from the filling of high pressures, however, these techniques usually work at extremely low temperatures which makes multiple adaptations of conventional process steps, such as the sealing of the gas container, to the low temperature conditions necessary, which is not desirable with respect investment and maintenance costs.

It is desirable that the density of the gas stored in a gas container is as high as possible, wherein the filling of the gas container should be reliable, reproducible, save and economical. The amount of gas filled into the container should be precisely metered and the throughput of gas filling facility should be as high as possible.

With respect to high temperature gas filling processes, that use high pressures above 300 bar, the known solutions to tightly connect a gas filling device with the gas container are challenging. The high pressures put high demands on safety and rigid connections and thick walled pipes are required to cope with the high pressure conditions.

With respect to the low temperature gas filling, the high pressure induced mechanical instabilities are less prominent, yet problems of thermal insulation, thermal tension and thermal expansion due to strong temperature gradients appear. In particular, the positioning of the gas containers at the gas supply station is not easy as the thermal contraction respectively expansion makes fine control of the spatial positioning system difficult.

Filling processes at room temperature operate at pressures above 300 bar and closing the filled pressurized gas containers is a difficult task. Usually complex high pressure vessels are used. The gas containers are brought into the high pressure vessel and are filled and closed under a high pressure. Usually the container comprises a membrane which is welded to the container. The closing process is technically complex and economically inefficient as the pressure vessel needs to be pressurized and depressurized for each loading cycle.

Gas filling at cold temperatures does not entail the problem of the pressure induced mechanical instabilities but needs to be performed at very low temperatures of usually below 100°K. Due to the low temperature and temperature gradients thermal induced stress and thermal expansion respectively contraction requires complex adaptation of the closing mechanism. It should be noted that in particular for airbag systems precise control of the amount of gas to be filled and stored in the gas container is indispensable for a reliable functioning of the airbag system.

An object of the present invention is to provide for a high pressure container for inflating an airbag with a container body for storing gas and a process for filling a high pressure gas container having a container body for storing gas, that allow for efficient, reproducible, reliable and economical filling of pressure gas containers.

This and other problems are solved according to the invention by a high pressure gas container and the process for filling a high pressure gas container as defined in the claims below. Further advantageous embodiments and developments, which can be employed individually or in any suitable combination, are also provided.

According to the invention the high pressure gas container with a container body for storing gas and with at least one membrane valve for discharging the stored gas is characterized by further comprising an auxiliary valve for introducing the gas into the container body and for temporarily closing the container body until the container body is sealed permanently, wherein the membrane valve and the auxiliary valve are in fluid connection with the container body.

The membrane valve is used for discharging the stored gas, when the container body is sealed permanently. The membrane valve may be opened when the stored gas is needed, e.g. during an accident which makes the operation of the airbag system necessary.
The membrane valve is gas tight on a permanent time basis, e.g. for over 15 years. Usually the membrane valve is closed by welding.

The auxiliary valve also helps to facilitate the supplying respectively introducing of gas into the container body. For instance after supplying a first gas or after introducing a second gas, the container body is temporarily closed and transported to a closing unit which closes the container body permanently.

The auxiliary valve may help to avoid gas leakage during the transport of the gas container for the time after the completion of the filling step until the gas container is permanently sealed.

The high pressure gas container may withstand pressures above 300 bar, for example up to 1300 bar, in particular in between 500 bar to 800 bar.

The gas to be introduced into the container may be a pure gas or a mixture of gases and may be an inert gas such as an noble gas in applications such as airbag systems. The gas container may be filled with a cryogenically solidified or a cryogenically liquefied gas and high pressure may be obtained by closing the gas container shortly after its filling and letting the gas container warm up to room temperature.

The membrane valve and the auxiliary valve may be connected to the container body with separate fluid connection lines. The membrane valve may be provided at the container body prior to its filling with gas. In this case the gas is to be introduced through the auxiliary valve into the container body.

The membrane valve may be non-reversibly openable. The auxiliary valve may be reversibly openable and closable.

In order to close the gas container permanently a sealing portion is provided at the auxiliary valve for permanently closing the auxiliary valve. The sealing portion may be provided in the fluid connection between the auxiliary valve and the container body, or, the auxiliary valve may be provided in the fluid interconnection between the sealing portion and the container body.

By closing the auxiliary valve the gas container may be sealed permanently with the sealing machine operating at ambient pressure and at ambient temperature.

Complex pressure vessels or specific adaptations to extremely low temperatures are not required anymore. Advantageously conventional sealing techniques such as welding may be used for closing the gas container permanently.

The auxiliary valve may be one of the following valves: a ball cock, a ball valve, a bibcock, a butterfly valve, a gate valve, a globe valve, a check valve, a rotary valve, a piston valve etc.

The auxiliary valve may be designed to be comparatively inexpensive as its purpose is solely for temporarily closing the container body. Usually it suffices when the auxiliary valve is able to retain the content of the gas container sufficiently constant for several minutes as usually the gas container may be permanently sealed shortly after its filling.

According to the invention the process for filling a high pressure gas container having a container body for storing gas, at least one membrane valve for discharging the stored gas and an auxiliary valve, wherein the membrane valve and the auxiliary valve are in fluid connection with the container body, comprises the following steps: The gas is introduced into the container body through the auxiliary valve, the auxiliary valve is at least temporarily closed, the auxiliary valve is sealed permanently.

The auxiliary valve helps to reduce losses due to evaporation out of the gas container by temporarily closing the container body until it is permanently sealed.

The membrane valve may be provided at the container body prior to its filling with gas. In this case the gas container is filled through the auxiliary valve and the auxiliary valve is then permanently sealed.

The membrane valve may also be provided at the container body after its filling with gas. In this case the filled container body is filled through the auxiliary valve, then the auxiliary valve is temporarily closed and then the membrane valve is affixed to auxiliary valve opposite to the gas container such that a rising pressure in the gas container does neither influence the affixing of the membrane valve nor lead to gas losses.

Thus the membrane valve may be provided at the gas container without the need of placing the gas container inside of a pressurized pressure vessel.

Advantageously prior to filling the container body with gas, the membrane valve is provided and is configured at the gas container.

Further details and favourable aspects, which may be applied alone or may be combined in any suitable manner, will be explained with respect to the following drawings, which shall not restrict the scope of the present invention but shall schematically and exemplarily illustrate the invention.
- Fig. 1: shows the two-step process according to the invention;
- Fig. 2: shows a high pressure gas container to be used according to the invention shown in cross section;
- Fig. 3: shows further high pressure gas container to be used according to the invention shown in cross section;
- Fig. 4: shows a detailed view of a supplying unit of a filling device according to the invention; and
- Fig. 5: shows a supplying unit of a further embodiment of the filling device according to the invention.

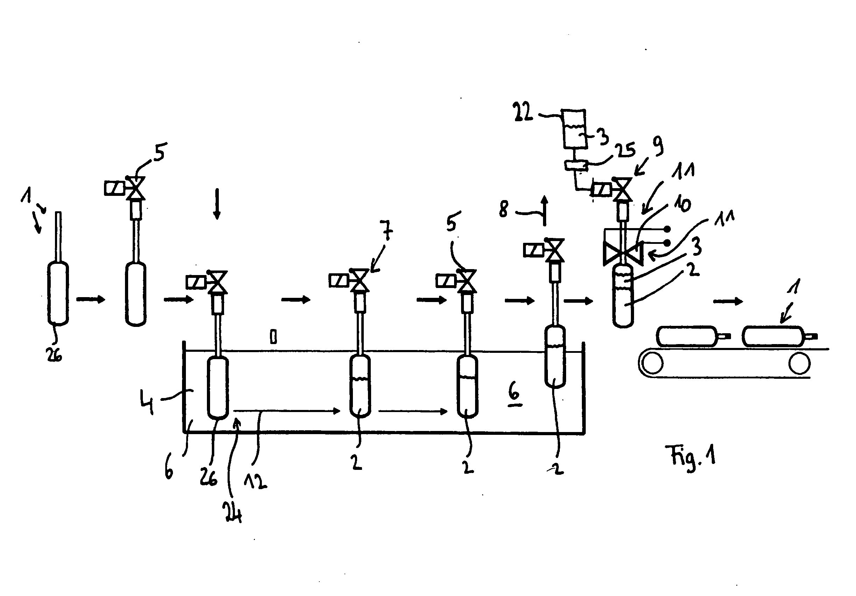

Fig. 1 shows schematically the two-step process for filling a high pressure gas container 1 with a first gas 2 and a second gas 3 using a supplying unit 7 for supplying the first gas 2 into the gas container 1 and an introducing unit 9 for introducing the second gas 3 into the gas container 1. The gas container 1 comprises a container body 26 for receiving the first gas 2 and the second gas 3 and is connected to an auxiliary valve 5. The gas container 1 is connected to a cooling bath 4 which comprises a third gas 6 which is liquefied in order to precool the gas container 1 down to 86°K. The third gas 6 is liquid nitrogen which is kept under a slight pressure in the cooling bath 4 in order to provide for 86°K in the cooling bath 4. This precooling is performed using a precooling unit 24 which at least partially immerses the gas container 1 in the cooling bath 4. The gas container 1 is then transported with a transport mechanism 12 to a supplying unit 7 for supplying liquid argon as first gas 2 into the gas container 1. Then the auxiliary valve 5 is closed in order to diminish evaporation losses of the first gas 2. Subsequently the cooling of the gas container 1 is stopped by disconnecting the gas container 1 from the cooling bath 2 by a stopping unit 8 and is transported to an introducing unit for introducing the second gas 3 in its gaseous state. The second gas 3 such as helium is taken from a second container 22 and is evaporated by an evaporator 25 and is introduced through the auxiliary valve 5. After completion of the introducing the auxiliary valve 5 is temporarily closed until the gas container 1 is permanently closed using a unit 10 for closing the gas container 1. The unit 10 for closing comprises a sealing device 11 which seals the gas container 1 by welding. Both the introducing unit 9 and the unit 10 for closing may be of a conventional type meaning that they do not need to be adapted for cryogenical temperatures and do not need to be capable of coping with high pressures above 300 bar. The second gas 3 is introduced at ambient temperature into the gas container 1. After closing the gas container 1 the gas container 1 are allowed to warm up to ambient temperatures such that the pressure inside of the container body 26 rises to a well-defined pressure around 600 bar. The first gas 2 may be supplied at a pressure ranging from 0,5 bar to 3 bar and the second gas 3 may be introduced at 15 bar. The amount of gas supplied respectively introduced into the gas container 1 may be controlled volumetrically, gravimetrically or by an opening time of a metering valve. The second gas may be metered according to the partial pressure that is eventually desired at room temperature. This metering may be performed outside of the cooling bath 4 for instance in the sealing device 11.

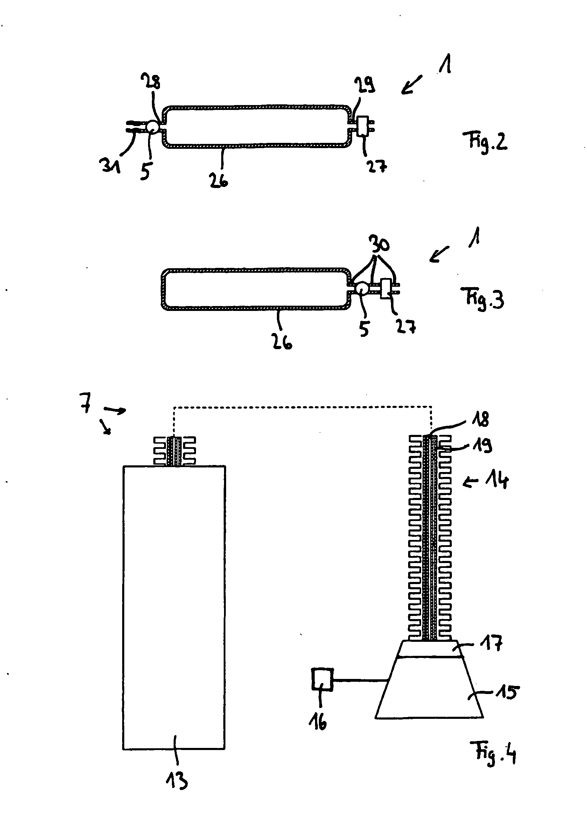

Fig. 2 shows a gas container 1 in cross section to be used according to the invention. The gas container 1 comprises the auxiliary valve 5 in a first connection line 28 to the container body 26 and a membrane valve 27 in a second connection line 29 to the container body 26. The membrane valve 27 is provided at the container body 26 before the beginning of the filling process. The membrane valve 27 is adapted to be opened at the instance of operation of the gas container 1 for example during the operation of the airbag system (not shown). The membrane valve 27 operates non-reversibly, i.e. opens only once. The membrane valve 27 may be welded to the container body 26 respectively to the second connection line 29. The auxiliary valve 5 is for facilitating the supplying of the first gas 2 respectively the introducing of the second gas 3 into the container body 26. The auxiliary valve 5 is for temporarily closing the container body 26 such that evaporation losses are reduced. After the supplying step of the first gas 2 respectively after the introducing step of the second gas 3, the auxiliary valve 5 is closed. The auxiliary valve 5 may also be closed in between the supplying and the introducing step. Once the container body 26 is completely filled with a gas 2, 3 or with a mixture of gases 2, 3 the first connection line 28 is closed using a sealing portion 31 by welding. The closing portion 31 makes sure that after the closing of the gas container 1, gas may not escape from the container body 26 through the first connection line 28. The sealing portion 31 allows for using inexpensive auxiliary valves 5 without limiting the advantages of temporarily closing the container body 26.

Fig. 3 shows a further gas container 1 in cross section to be used according to the invention, wherein the membrane valve 27 and the auxiliary valve 5 are in a fluid series connection 30. In this case the permanent closing of the container body 26 is realized by the membrane valve 27 which is closed after the filling of the container body 26 with a gas 2, 3 or a mixture of gases 2, 3. The auxiliary valve 5 is used for facilitating the supplying of the first gas and/or the introducing of the second gas 3.

Fig. 4 shows schematically the supplying unit 7 comprising a gas supply station 13 with a flexible filling tube 14 which is to be connected to the container 1. For connecting the filling tube 14 with the gas container 1, a tube head 15 is provided which comprises a metering valve 17. The tube head 15 is positioned at the gas container 1 with a positioning device 16. Due to the flexibility of the filling tube 14 a gas tight connection between the gas supply station 13, respectively the supplying unit 7, and the gas container 1 is established in a short time. The filling tube 14 is thermally isolated and comprises a gas channel 18 for supplying the first gas 2 into the gas container 1. The gas channel 18 is isolated by means of an insulation vacuum. For this purpose the filling tube 14 is doubled walled. For further reducing a heat transfer through radiation within the insulation vacuum a heat shield 19 is introduced, which is at least partially actively cooled. The moveable tube head 15 allows for a fast connection which is important if a multiplicity of gas containers 1 need to be filled.

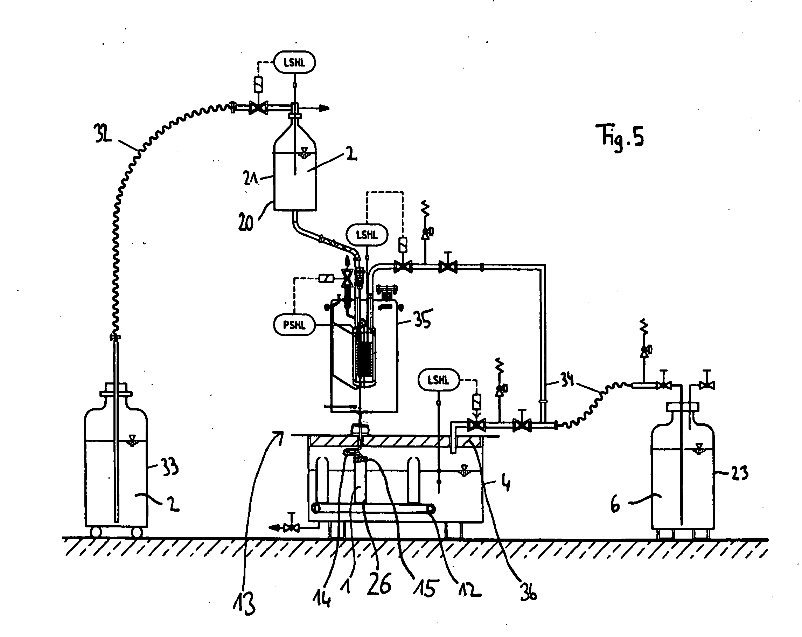

Fig. 5 shows a further embodiment of a supplying unit 7 of the device for filling gas containers 1. Liquid argon is stored as first gas 2 in a large supply tank 33 and is supplied through a supply tube 32 into a first container 21 which also serves as phase separator 20. The liquid argon from the phase separator 20 is precooled in a second precooling unit 35 for precooling the second gas 2. The liquid argon is cooled to 2°K below its boiling point in order to avoid any formation of gas bubbles within the liquid phase, which might affect the metering precision of the amount of gas supplied into the gas container 1. The second precooling unit 35 uses liquid nitrogen as third gas 6 from a third container 23 which is connected to the second precooling unit 35 with conduits 34. The precooled liquid argon is then supplied with the filling tube 14 to the gas container 1. For this purpose the filling tube 14 comprises a moveable tube head 15 which may be positioned precisely at the gas container 1. The gas container 1 is transported through the cooling bath by a transport mechanism 12. The cooling bath 4 is closed with a cover 36 in order to establish a pressure in the cooling bath 4 with which the temperature in the cooling bath is precisely controlled.

In the following, further aspects, which are related to the present invention, are described. These individual aspects may be employed individually and separately or in any suitable combination with each other respectively one another:

An advantageous process for filling high pressure gas containers 1 comprises the steps: Supplying a liquefied or solidified first gas 2 from a gas supply station 13 through a thermally insulated filling tube 14 with a movable tube head 15 to the high pressure gas container 1. During the supplying step of the first gas 2, the gas container 1 may be cooled, in particular by a cooling bath 4. The filling tube 14 is in particular cooled at least partially along its length, in particular by the cooling bath 4. The filling tube 14 may be filled using a two step filling process, in which after the supplying step of the first gas 2, a gaseous second gas 3, in particular Helium, is introduced into the gas container 1, wherein in particular during the supplying step of the first gas 2, the gas container 1 is cooled, in particular by a cooling bath 4, and before or during the introducing step of the second gas 3 the cooling of the gas container 1 is stopped, in particular the gas container 1 is taken out of the cooling bath 4. Advantageously high pressure gas containers 1 for air bag systems are filled. The first gas 2 and / or the second gas 3 may be a mixture of gases.

An advantageous process of batch filling of high pressure gas containers 1 with gas, comprises the step cooling multiple gas containers 1 in parallel, which are filled sequentially using the process according to the invention.

An advantageous arrangement for filling high pressure gas containers 1 with gas comprises a gas supply station 13 and multiple high pressure gas containers 1, wherein the gas supply station 13 comprises at least one thermally insulated filling tube 14 with a movable tube head 15 for gas filling of the gas containers 1, wherein the arrangement may comprise a positioning device 16 for moving the tube head 15 to the individual gas containers 1. Advantageously, a metering valve 17 for controlling a gas flow through the filling tube 14 may be provided in the tube head 15. The gas supply station 13 may comprise a cooling bath 4 for cooling the gas containers 1, wherein the filling tube 14 may be at least partially immersed in the cooling bath 4 and wherein the arrangement may further comprise a transport mechanism 12 for transporting the gas containers 1 through the cooling bath 4. In a useful embodiment, the filling tube 14 may be at least doubled walled and may comprise an insulation vacuum for thermal insulation. The filling tube 14 may be actively cooled by a cooling medium, in particular a liquefied third gas 6 and / or may comprise a gas channel 18 and a tubular heat shield 19 at least partially around the gas channel 18, wherein the heat shield 19 is cooled by the cooling medium. Tube head 15 may comprise an auxiliary valve 5 for temporarily closing the gas container 1. The gas filling tube 14 is in particular for filling a liquefied first gas 2 into the gas containers 1. The gas supply station 13 may comprise a first container 21 for a liquefied first gas 2. The gas supply station 13 may advantageously comprise an introducing unit 9 for introducing a gaseous second gas 3 into the gas container 1. The gas supply station 13 may comprise a second container 22 for a liquefied second gas 3, wherein the gas supply station 13 may comprise an evaporator 25 for converting the liquefied second gas 3 into its gaseous state. The gas supply station 13 may comprise a third container 23 for a liquefied third gas 6 as cooling medium.

An advantageous gas supply station 13 for filling high pressure gas containers 1 with gas is adapted and in particular destined for use in the arrangement according to the invention.

An advantageous process for filling a high pressure gas container 1, comprises the following steps: Supplying a liquefied or solidified first gas 2 into a gas container 1 while the gas container 1 is being cooled; stopping the cooling of the gas container 1 after the supplying step of the first gas; then introducing a gaseous second gas 3 into the gas container 1; closing the gas container 1, wherein in particular the cooling of the gas container 1 may be performed in a cooling bath 4, in particular a cooling bath 4 of liquid nitrogen, and the cooling is stopped by disconnecting the gas container 1 from the cooling bath 4. The first gas 2 and / or the second gas 3 may be a mixture of plural gases. The first gas 2 and / or the second gas 3 may be an inert gas, in particular a noble gas. After the supplying step of the first gas 2 and before the introducing step of the second gas 3 the gas container 1 may be temporarily closed. The gas container 1 is in particular temporarily closed using an auxiliary valve 5. The closing of the gas container 1 may be performed by welding. The gas containers 1 are in particular for air bag systems. The supplying of the first gas 2 may be performed at a pressure in the range from 0,2 bar to 15 bar , in particular in the range from 0,5 bar to 4 bar. The supplying of the second gas 3 may be performed at a pressure in the range from 2 bar to 100 bar, in particular, in the range from 5 bar to 50 bar, for example in the range from 10 bar to 20 bar. The first gas 2 may be supplied in a liquid state into the gas container 1 and solidifies in the gas container 1. The first gas 2 may be supplied at a temperature lower than its boiling temperature, in particular at least 1°K, preferably at least 2° K, lower than its boiling temperature, and at a temperature higher than its freezing temperature, in particular at least 1°K, preferably at least 2° K, higher than its freezing temperature. After the supplying step of the first gas 2 and before the introducing step of the second gas 3, the gas container 1 may be connected to a sealing device 11, in particular a welding apparatus 12, and after the introducing step of the second gas 3 the gas container 1 may be sealed by the sealing device 11, in particular by welding. The cooling is in particular performed using a liquefied third gas 6, in particular liquid nitrogen, wherein in particular the temperature of the third gas 6 may be controlled by controlling the pressure in the third gas 6. The gas container 1 may be cooled before the supplying step of the first gas 2.

An advantageous device for filling high pressure gas containers 1, comprises: A supplying unit 7 for supplying a liquefied or solidified first gas 2 into a gas container 1 while the gas container 1 is being cooled; a stopping unit 8 for stopping the cooling of the gas container 1; an introducing unit 9 for introducing a gaseous second gas 3 into the gas container 1 after the supplying step of the first gas; a unit 10 for closing the gas container 1, wherein in particular the device further comprises a cooling bath 4 for cooling the gas container 1, wherein in particular the device further comprises a transport mechanism 12 for transporting the gas containers 1 through the cooling bath 4. The unit 10 for closing the gas container 1 may be a welding apparatus 12. The device is in particular for filling high pressure gas containers 1 for air bag systems. The device in particular further comprises a gas supply station 13 and at least one thermally insulated filling tube 14 with a tube head 15 that is in fluid connection with the gas supply station 13, wherein the filling tube 14 is for supplying the first gas 2 to the gas containers 1, wherein the device in particular further comprises a positioning device 16 for positioning the tube head 15 at the gas containers 1.

The invention concerns a high pressure gas container 1 with a container body 26 for storing gas and at least one membrane valve 27 for discharging the stored gas, characterized by further comprising an auxiliary valve 5 for introducing the gas into the container body 26 and for temporarily closing the container body 26 until the container body 26 is sealed permanently, wherein the membrane valve 27 and the auxiliary valve 5 are in fluid connection with the container body 26. The invention also concerns a process for filling a high pressure gas container 1 having a container body 26 for storing gas, at least one membrane valve 27 for discharging the stored gas and an auxiliary valve 5 wherein the membrane valve 27 and the auxiliary valve 5 are in fluid connection with the container body 26, comprising the following steps: The gas is introduced into the container body 26 through the auxiliary valve 5, the auxiliary valve 5 is at least temporarily closed, the auxiliary valve 5 is sealed permanently. The invention allows for reliable, economical, reproducible and precise filling of high pressure gas containers using a conventional sealing apparatus without the need of its adaptation to either high pressure or low temperature appliance.

### Reference numerals

- 1: gas container
- 2: first gas
- 3: second gas
- 4: cooling bath
- 5: auxiliary valve
- 6: third gas
- 7: supplying unit
- 8: stopping unit
- 9: introducing unit
- 10: unit for closing
- 11: sealing device
- 12: transport mechanism
- 13: gas supply station
- 14: filling tube
- 15: tube head
- 16: positioning device
- 17: metering valve
- 18: gas channel
- 19: heat shield
- 20: phase separator
- 21: first container
- 22: second container
- 23: third container
- 24: precooling unit
- 25: evaporator
- 26: container body
- 27: membrane valve
- 28: first connection line
- 29: second connection line
- 30: fluid series connection
- 31: sealing portion
- 32: supply tube
- 33: supply tank
- 34: conduits
- 35: second precooling unit
- 36: cover

## Claims

1. High pressure airbag gas container (1) with a container body (26) for storing gas at a pressure above 300 bar and at least one membrane valve (27) for discharging the stored gas for inflating an airbag,
**characterized by**
further comprising an auxiliary valve (5) for introducing the gas into the container body (26) and for temporarily closing the container body (26) until the container body (26) is sealed permanently, wherein the membrane valve (27) and the auxiliary valve (5) are in fluid connection with the container body (26).

2. Gas container (1) according to claim 1, **characterized in that** the membrane valve (27) and the auxiliary valve (5) are connected to the container body (26) with separate fluid connection lines (28, 29).

3. Gas container (1) according to one of the preceding claims, **characterized in that** the membrane valve (27) is non-reversibly openable.

4. Gas container (1) according to one of the preceding claims, **characterized in that** the auxiliary valve (5) is reversibly openable and closable.

5. Gas container (1) according to one of the preceding claims, **characterized in that** a sealing portion (31) is provided at the auxiliary valve (5) for permanently closing the auxiliary valve (5).

6. Gas container (1) according to claim 5, **characterized in that** the sealing portion (31) is provided in the fluid connection between the auxiliary valve (5) and the container body (26).

7. Gas container (1) according to claim 6, **characterized in that** the auxiliary valve (5) is provided in the fluid interconnection between the sealing portion (31) and the container body (26).

8. Gas container (1) according to one of the preceding claims, **characterized in that** the auxiliary valve (5) is one of the following valves: a ball cock, a ball valve, a bibcock, a butterfly valve, a gate valve, a globe valve, check valve, a rotary valve, a piston valve.

9. Process for filling a high pressure gas container (1) for pressures above 300 bar having a container body (26) for storing gas, at least one membrane valve (27) for discharging the stored gas for inflating an airbag and an auxiliary valve (5), wherein the membrane valve (27) and the auxiliary valve (5) are in fluid connection with the container body (26), comprising the following steps:
the gas is introduced into the container body (26) through the auxiliary valve (5),
the auxiliary valve (5) is at least temporarily closed,
the auxiliary valve (5) is sealed permanently.

10. Process according to claim 9, wherein the gas comprises two gases (2, 3), the first gas (2) being filled into the gas container (1) in liquid state in a first step, and the second gas (3) being filled into the gas container (1) in a gaseous state.

11. Process according to claim 9 or 10, **characterized in that** the auxiliary valve (5) is sealed by welding.

12. Process according to one of the claims 9 to 11, **characterized in that** prior to filling the container body (26) with gas, the membrane valve (27) is provided and is configured at the gas container (1).

## Patentansprüche

1. Airbag-Hochdruckgasbehälter (1) mit einem Behälterkörper (26) zum Speichern von Gas bei einem Druck oberhalb von 300 bar und mit wenigstens einem Membranventil (27) zur Abgabe des gespeicherten Gases zum Aufblasen eines Airbags, **dadurch gekennzeichnet dass** er weiterhin ein Hilfsventil (5) zum Einleiten des Gases in den Behälterkörper (26) und zur vorübergehenden Schließung des Behälterkörpers (26), bis der Behälterkörper (26) permanent abgedichtet ist, umfasst, wobei das Membranventil (27) und das Hilfsventil (5) fluidmäßig mit dem Behälterkörper (26) verbunden sind.

2. Gasbehälter (1) nach Anspruch 1, **dadurch gekennzeichnet, dass** das Membranventil (27) und das Hilfsventil (5) über getrennte Fluidverbindungsleitungen (28, 29) mit dem Behälterkörper (26) verbunden sind.

3. Gasbehälter (1) nach einem der vorhergehenden Ansprüche, **dadurch gekennzeichnet, dass** das Membranventil (27) nicht umkehrbar geöffnet werden kann.

4. Gasbehälter (1) nach einem der vorhergehenden Ansprüche, **dadurch gekennzeichnet, dass** das Hilfsventil (5) umkehrbar geöffnet und geschlossen werden kann.

5. Gasbehälter (1) nach einem der vorhergehenden Ansprüche, **dadurch gekennzeichnet, dass** an dem Hilfsventil (5) ein Dichtabschnitt (31) zur permanenten Schließung des Hilfsventils (5) vorgesehen ist.

6. Gasbehälter (1) nach Anspruch 5, **dadurch gekennzeichnet, dass** der Dichtabschnitt (31) in der fluidmäßigen Verbindung zwischen dem Hilfsventil (5) und dem Behälterkörper (26) vorgesehen ist.

7. Gasbehälter (1) nach Anspruch 6, **dadurch gekennzeichnet, dass** das Hilfsventil (5) in der fluidmäßigen Verbindung zwischen dem Dichtabschnitt (31) und dem Behälterkörper (26) vorgesehen ist.

8. Gasbehälter (1) nach einem der vorhergehenden Abschnitte, **dadurch gekennzeichnet, dass** das Hilfsventil (5) eins aus der Gruppe der nachfolgenden Ventile ist: ein Kugelhahn, ein Kugelventil, ein Ablasshahn, ein Schmetterlingsventil, ein Absperrschieber, ein Ringkolbenventil, ein Rückschlagventil, ein Kugelschieber, ein Kolbenventil.

9. Verfahren zum Befüllten eines Hochdruckgasbehälters (1) für Drücke oberhalb von 300 bar, der einen Behälterkörper (26) zum Speichern von Gas aufweist, wenigstens ein Membranventil (27) zum Ablassen des gespeicherten Gases zum Aufblasen eines Airbags, und ein Hilfsventil (5), wobei das Membranventil (27) und das Hilfsventil (5) fluidmäßig mit dem Behälterkörper (26) verbunden sind, umfassend die folgenden Schritte:
das Gas wird durch das Hilfsventil (5) in den Behälterkörper (26) eingeleitet,
das Hilfsventil (5) wird zumindest vorübergehend geschlossen,
das Hilfsventil (5) wird permanent abgedichtet.

10. Verfahren nach Anspruch 9, wobei das Gas zwei Gase (2, 3) umfasst, wobei in einem ersten Schritt das erste Gas (2) im flüssigen Zustand in den Gasbehälter (1) eingefüllt wird, und das zweite Gas (3) in einem gasförmigen Zustand in den Gasbehälter (1) eingefüllt wird.

11. Verfahren nach Anspruch 9 oder 10, **dadurch gekennzeichnet, dass** das Hilfsventil (5) durch Schweißen abgedichtet ist.

12. Verfahren nach einem der Ansprüche 9 bis 11, **dadurch gekennzeichnet, dass** bevor der Behälterkörper (26) mit Gas befüllt wird, das Membranventil (27) am Gasbehälter (1) vorgesehen und gestaltet wird.

## Revendications

1. Réservoir pour gaz à haute pression d'airbag (1) avec un corps de réservoir (26) pour stocker du gaz à une pression au dessus de 300 bar et avec au moins une valve à diaphragme (27) pour évacuer le gaz stocké pour gonfler un airbag, **caractérisé en ce qu'**il comprend en outre une valve auxiliaire (5) pour introduire le gaz dans le corps de réservoir (26) et pour fermer temporairement le corps de réservoir (26) jusqu'à ce que le corps de réservoir (26) soit étanchéifié en permanence, la valve à diaphragme (27) et la valve auxiliaire (5) étant connectées de façon fluidique avec le corps de réservoir (26).

2. Réservoir pour gaz (1) selon la revendication 1, **caractérisé en ce que** la valve à diaphragme (27) et la valve auxiliaire (5) sont connectées au corps de réservoir (26) par des conduits de raccordement de fluide (28, 29) séparés.

3. Réservoir pour gaz (1) selon l'une des revendications précédentes, **caractérisé en ce que** la valve à diaphragme (27) peut être ouverte irréversiblement.

4. Réservoir pour gaz (1) selon l'une des revendications précédentes, **caractérisé en ce que** la valve auxiliaire (5) peut être ouverte et fermée réversiblement.

5. Réservoir pour gaz (1) selon l'une des revendications précédentes, **caractérisé en ce qu'**une section d'étanchéité (31) est prévue sur la valve auxiliaire (5) afin de fermer en permanence la valve auxiliaire (5).

6. Réservoir pour gaz (1) selon la revendication 5, **caractérisé en ce que** la section d'étanchéité (31) est prévue dans la connexion fluidique entre la valve auxiliaire (5) et le corps de réservoir (26).

7. Réservoir pour gaz (1) selon la revendication 6, **caractérisé en ce que** la valve auxiliaire (5) est prévue dans l'interconnexion entre la section d'étanchéité (31) et le corps de réservoir (26).

8. Réservoir pour gaz (1) selon l'une des revendications précédentes, **caractérisé en ce que** la valve auxiliaire (5) est une parmi les valves suivantes : un robinet à flotteur, un clapet à bille, un robinet de vidange, un clapet à papillon, une vanne d'étranglement, un robinet à soupape, une valve de non-retour, une soupape rotative, une soupape à piston.

9. Procédé pour remplir un réservoir pour gaz à haute pression (1) pour des pressions au dessus de 300 bar, disposant d'un corps de réservoir (26) pour stocker du gaz, au moins d'une valve à diaphragme (27) pour évacuer le gaz stocké pour gonfler un airbag et d'une valve auxiliaire (5), la valve à diaphragme (27) et la valve auxiliaire étant connectées de façon fluidique avec le corps de réservoir (26), le procédé comprenant les étapes suivantes :
le gaz est introduit dans le corps de réservoir (26) par la valve auxiliaire (5),
la valve auxiliaire (5) est fermée au moins temporairement,
la valve auxiliaire (5) est étanchéifié en permanence.

10. Procédé selon la revendication 9, le gaz comprenant deux gaz (2, 3), le premier gaz (2) étant rempli dans le réservoir pour gaz (1) en état liquide dans une première étape, et le second gaz (3) étant rempli dans le réservoir pour gaz (1) en un état gazeux.

11. Procédé selon la revendication 9 ou 10, **caractérisé en ce que** la valve auxiliaire (5) est étanchéifiée par soudage.

12. Procédé selon l'une des revendications 9 à 11, **caractérisé en ce qu'**avant de remplir le corps de réservoir (26) avec du gaz, la valve à diaphragme (27) est prévue et configurée sur le réservoir pour gaz (1).
